# EUROPÄISCHE PATENTSCHRIFT

(11) **EP 2 368 050 B1**
(45) Veröffentlichungstag und Bekanntmachung des Hinweises auf die Patenterteilung: **27.04.2016**
(21) Anmeldenummer: 09764727.5
(22) Anmeldetag: 02.12.2009
(51) Int. Cl.: F16B 29/00

(54) **DÄMPFUNGSVORRICHTUNG**
DAMPING DEVICE
DISPOSITIF D AMORTISSEMENT

(30) Priorität: 18.12.2008 DE 102008063580
(43) Veröffentlichungstag der Anmeldung: 28.09.2011
(73) Patentinhaber: fischerwerke GmbH & Co. KG, 72178 Waldachtal (DE)
(72) Erfinder: LINKA, Martin, 72160 Horb a.N. (DE); BÖHMEL, Philipp, 70565 Stuttgart (DE)
(86) Internationale Anmeldenummer: PCT/EP2009/008576
(87) Internationale Veröffentlichungsnummer: WO 2010/069462

(56) Entgegenhaltungen:
- EP-A2- 0 995 914
- DE-A1- 4 219 761
- DE-A1- 19 603 682
- DE-A1-102006 048 655

## Beschreibung

Die Erfindung betrifft eine Dämpfungsvorrichtung gemäß dem Oberbegriff des Anspruchs 1. Sie dient zur Befestigung eines Bauteils an einem Ankergrund mit Hilfe eines Ankers. Das Bauteil kann allgemein auch als "zu befestigender Gegenstand" bezeichnet werden und weist beispielsweise ein Loch zum Aufsetzen auf den Anker auf bzw. eine Anzahl Löcher zum Aufsetzen auf mehrere Anker. Der Ankergrund besteht beispielsweise aus Mauerwerk, Beton, Fels oder Stein. Für solche Befestigungen verwendete Anker sind üblicherweise stangenförmig und weisen ein Gewinde an einem Ende oder über ihre gesamte Länge auf, das in verankertem Zustand aus dem Ankergrund vorsteht und das nachfolgend als "hinteres Ende" bezeichnet wird. Nach Aufsetzen des Bauteils auf den Anker wird das Bauteil durch Aufschrauben und Anziehen einer Mutter auf das Gewinde des Ankers gegen den Ankergrund gespannt. Die Verankerung, also die Befestigung des Ankers im Ankergrund, erfolgt üblicherweise mechanisch oder chemisch. Eine mechanische Verankerung erfolgt durch Aufspreizen einer Spreizhülse oder eines Spreizdübels in einem nicht-hinterschnittenen oder einem hinterschnittenen, üblicherweise durch Bohren hergestellten Loch. Die chemische Verankerung ist eine stoffschlüssige Verankerung durch Einkleben oder Einmörteln eines Ankers in einem Loch im Ankergrund.

Das gegen den Ankergrund gespannte Bauteil hält quer zum Anker, d.h. parallel zu einer Oberfläche des Ankergrunds, durch Reibschluss am Ankergrund. Erst bei einer hohen Beanspruchung, die hier als Überlastung bezeichnet wird, überwindet das Bauteil die Reibkraft und verschiebt sich auf dem Ankergrund. Solche Überlastungen treten beispielsweise bei Erdbeben auf. Die Dämpfungsvorrichtung kann die zum Verschieben des Bauteils auf dem Ankergrund erforderliche Kraft erhöhen. Ihr eigentlicher Zweck oder jedenfalls ein Zweck ist allerdings, die auf den Anker und auf das Bauteil wirkenden Belastungen bei einer Überlastung zu verringern, indem eine (begrenzte) Verschiebung des Bauteils auf dem Ankergrund ermöglicht und der Verschiebung zugleich entgegengewirkt wird. Es werden beispielsweise Stoßbeanspruchungen des Bauteils, wie sie bei Erdbeben auftreten können, gemindert.

Aus der Offenlegungsschrift DE 101 34 809 A1 ist eine Unterlegscheibe als Reibkraftverstärker bekannt, die kantige Körner aus einem harten Material wie beispielsweise Korund oder Hartmetall aufweist, die aus der Scheibe vorstehen. Die Unterlegscheibe wird zwischen dem Ankergrund und dem zu befestigenden Bauteil auf einen im Ankergrund verankerten und aus dem Ankergrund vorstehenden, stangenförmigen Anker aufgesetzt und es wird das Bauteil gegen den Ankergrund gespannt. Die aus der Unterlegscheibe vorstehenden Körner drücken sich beim Spannen des Bauteils gegen den Ankergrund in die einander zugewandten Oberflächen des Ankergrunds und des Bauteils ein und erhöhen die Reibung zwischen dem Bauteil und dem Ankergrund. Die Unterlegscheibe vergrößert die Kraftübertragung zwischen dem Bauteil und dem Ankergrund parallel zu ihren einander zugewandten Oberflächen, also quer bzw. radial zum Anker, dessen Querbeanspruchung dadurch verringert wird. Auf den Ankergrund einwirkende Stöße werden allerdings mit unverminderter Stärke auf das befestigte Bauteil übertragen.

Die Offenlegungsschrift DE 33 31 097 A1 offenbart, ein Tellerfederpaket auf einen Anker aufzusetzen, über das der Anker das zu befestigende Bauteil gegen den Ankergrund spannt. Die Tellerfedern sollen die mit dem Anker aufgebrachte Vorspannung bei einer Relaxation aufrecht erhalten.

Eine vergleichbare Anordnung offenbart die Offenlegungsschrift DE 101 06 844 A1, bei der ebenfalls ein Tellerfederpaket auf einen Anker aufgesetzt wird. Das Tellerfederpaket ist in einem Käfig aufgenommen, der die Tellerfedern zusammenhält, bis der Käfig beim Setzen und Vorspannen des Ankers geöffnet wird. Dann kommen die Tellerfedern frei und spannen das zu befestigende Bauteil gegen den Ankergrund.

Die Offenlegungsschrift DE 196 25 176 A1 offenbart eine chemische Verankerung mit einem ringförmigen, elastischen Element, das auf einem vorderen Ende einer Ankerstange angeordnet ist. Das elastische Element befindet sich nahe einem Bohrlochgrund unterhalb eines Mörtels der chemischen Verankerung. Das elastische Element federt in axialer Richtung des Ankers, es wirkt einem Abbau der Vorspannung bei Relaxation entgegen und mindert die axiale Belastung des Ankers bei dynamischer Beanspruchung.

Aus dem Dokument DE 196 03 682 A1 ist eine Dämpfungsvorrichtung mit einer Elastomerhülse bekannt, die im gesetzten Zustand in einem Bohrloch in einem Ankergrund angeordnet ist. Die Elastomerhülse umschließt in gesetztem Zustand den Anker. Durch axiales Spannen mit dem Anker kann die Elastomerhülse so gestaucht werden, dass sie sowohl am Anker, wie auch am Ankergrund spielfrei anliegt. Der Anker liegt dabei direkt in einem Durchgangsloch am befestigten Bauteil an.

Eine weitere Dämmpfungsvorrichtung ist aus der Offenlegungsschrift DE 42 19 761 A1 bekannt, die einen Anker aufweist, der im gesetzten Zustand von einer Elastomerhülse umschlossen ist. Desweiteren zeigt die europäische Patentanmeldung EP 0 995 914 A2 einen Anker, an dessen hinterem Ende eine Elastomerhülse angeordnet ist. Die Elastomerhülse wird mit dem Anker gespannt und dabei gestaucht, so dass die Elastomerhülse in einem Durchgangsloch an einem Bauteil anliegt.
Ein Verfahren zum erdbebensicheren Befestigen eines Bauteils an einem Ankergrund ist aus DE 10 2006 048655 bekannt. Aufgabe der Erfindung ist, eine Dämpfungsvorrichtung für die Befestigung eines Bauteils mit einem Anker an einem Ankergrund vorzuschlagen, das schockartige Querbeanspruchungen dämpft, wie sie beispielsweise bei Erdbeben vorkommen können.

Diese Aufgabe wird erfindungsgemäß durch die Merkmale des Anspruchs 1 gelöst. Die erfindungsgemäße Dämpfungsvorrichtung weist eine Durchführungsöffnung für einen Anker auf, sie ist beispielsweise ring- oder hülsenförmig. Sie weist eine Elastomerhülse auf, die in gesetztem Zustand den Anker umschließt. Die Elastomerhülse ist elastisch oder jedenfalls vorwiegend elastisch. Ein eventuelles zusätzliches plastisches Verhalten der Elastomerhülse kann die Dämpfungswirkung weiter verbessern, wobei plastisch verformte Anteile der Elastomerhülse bei einer erneuten Beanspruchung nicht mehr zur Dämpfung beitragen. Die Elastomerhülse wird beim Befestigen des Bauteils am Ankergrund insbesondere durch das Spannen des Bauteils gegen den Ankergrund durch beispielsweise Aufschrauben und Festziehen einer Mutter auf das Gewinde des Ankers axial gestaucht und dehnt sich dadurch radial nach innen und nach außen aus. Die Elastomerhülse kann jedoch auch unabhängig vom Anker und vom Bauteil axial gestaucht werden. Insbesondere füllt die Elastomerhülse einen ringförmigen Hohlraum, der den Anker in einer Adapterhülse der Dämpfungsvorrichtung umschließt, spielfrei aus. Insbesondere ist ein Volumen der Elastomerhülse, die zumindest näherungsweise als inkompressibel angesehen werden kann, in etwa so groß wie oder größer als das Volumen des ringförmigen, den Anker umgebenden Hohlraums. Die Elastomerhülse der Dämpfungsvorrichtung liegt nach dem axialen Spannen sowohl innen am Anker als auch außen spielfrei an. Die Spielfreiheit der Elastomerhülse nach dem axialen Spannen hat den Vorteil einer Dämpfung ohne Leerweg, wobei die Dämpfung quer bzw. radial zum Anker, d.h. parallel zu den einander zugewandten Oberflächen des Ankergrunds und des am Ankergrund befestigten Bauteils wirkt. Ein weiterer Vorteil der Erfindung ist eine Zentrierwirkung der Elastomerhülse auf das Bauteil beim axialen Spannen und Stauchen.

Die Erfindung sieht eine Adapterhülse zur Aufnahme der Elastomerhülse vor. Die Adapterhülse bildet eine Fassung oder ein Gehäuse für die Elastomerhülse und weist vorzugsweise einen Boden mit Mittelloch auf. Die Adapterhülse kann, wenn sie einen Boden aufweist, kürzer sein als das zu befestigende Bauteil dick ist. Die Adapterhülse und die Dämpfungsvorrichtung insgesamt sitzen in diesem Fall nicht auf dem Ankergrund auf, so dass Reibung ausschließlich vom Bauteil auf den Ankergrund und nicht teilweise auch von der Dämpfungsvorrichtung auf den Ankergrund übertragen wird. Ein Boden der Adapterhülse, sofern vorhanden, stützt die Elastomerhülse an dem Stirnende, das dem Ankergrund zugewandt ist, axial ab, so dass die Elastomerhülse beim axialen Spannen und Stauchen nicht in beispielsweise einen Ausbruchkrater im Ankergrund an einer Mündung eines Bohrlochs, in dem der Anker befestigt ist, verdrängt wird. Auch der Querkraftabtrag und die bei plastischer Verformbarkeit damit verbundene Dämpfung ist bei dieser Ausgestaltung der Erfindung möglich.
Eine Ausgestaltung der Erfindung sieht eine Lochscheibe an Stelle des oben genannten Bodens der Adapterhülse an einem Stirnende der Elastomerhülse vor. Die Lochscheibe muss nicht außen am Stirnende sein, so dass ihre eine Oberfläche das Stirnende bildet, es genügt, wenn die Lochscheibe nahe am Stirnende angeordnet ist. Die Lochscheibe bildet eine Stützfläche für die Elastomerhülse. Sie ist beispielsweise dann von Vorteil, wenn ein Bohrloch, in welchem der Anker verankert ist, einen Ausbruchkrater an einer Lochmündung aufweist. Die Lochscheibe vermeidet, dass die Elastomerhülse in den Ausbruchkrater verdrängt wird. Die Lochscheibe kann plastisch verformbar sein und eine zusätzliche Funktion aufweisen: bei einer Verschiebung des befestigten Bauteils auf dem Ankergrund trägt die Lochscheibe nach Überwindung des Spiels an ihrem Innen- und Außenumfang eine Querkraft auf den Anker ab. Ein Mittelloch der Lochscheibe wird dabei zu einem Langloch verformt, wodurch die Verschiebung des Bauteils gegenüber dem Ankergrund gedämpft wird. Bei plastischer Verformung ist die Dämpfungswirkung nur bei einer ersten Verschiebung in einer Richtung vorhanden. Bei einer erneuten Verschiebung in derselben Richtung dämpft die Lochscheibe nur, wenn die Verschiebung über die erste Verschiebung hinausgeht. Ebenso ist eine Dämpfungswirkung bei Verschiebung in einer anderen Richtung vorhanden.

Eine Ausgestaltung der Erfindung sieht vor, dass die Elastomerhülse einen Konus aufweist, wobei sich der Konus über die gesamte oder über einen Teil einer Länge der Elastomerhülse erstrecken kann. Der Konus soll insbesondere die Verformung der Elastomerhülse beim Stauchen verbessern und beispielsweise vermeiden, dass Material der Elastomerhülse auf einer dem Ankergrund abgewandten Oberfläche wulstartig nach außen verdrängt und eingequetscht wird. Auch kann der Konus als Einführhilfe dienen, er muss dann allerdings am anderen Stirnende der Elastomerhülse vorgesehen sein.

Eine Ausgestaltung der Erfindung sieht einen Hohlkonus vor, in dem die Elastomerhülse in gesetztem Zustand aufgenommen ist und nach dem axialen Spannen und Stauchen spielfrei einliegt. Wie der Konus der Elastomerhülse hat auch der Hohlkonus den Zweck, die Verformung der Elastomerhülse beim Stauchen zu verbessern. Konus und Hohlkonus können gemeinsam oder jeweils einzeln vorgesehen sein.

Eine Weiterbildung der Erfindung sieht vor, dass sich der Hohlkonus in der Richtung verjüngt, aus der die Elastomerhülse beim Zusammensetzen der Dämpfungsvorrichtung in den Hohlkonus eingebracht wird. Das Einbringen der Elastomerhülse in den Hohlkonus ist dadurch vereinfacht.

Der Hohlkonus kann in dem zu befestigenden Bauteil vorgesehen sein, beispielsweise kann das Bauteil ein konisches Durchgangsloch aufweisen. Die Erfindung sieht die Adapterhülse vor, die den Hohlkonus aufweist. Auch mit dem Hohlkonus kann die Adapterhülse elastisch verformbar sein, eine Querkraft auf den Anker abtragen und zur Dämpfung beitragen.

Eine Weiterbildung der Erfindung sieht vor, dass sich der Hohlkonus der Adapterhülse in Richtung des Ankergrunds verjüngt. Die Adapterhülse weist dadurch nahe dem Ankergrund weniger Zwischenraum zum Anker auf als mit Abstand vom Ankergrund. Ein Querkraftabtrag von der Adapterhülse auf den Anker findet dadurch nahe am Ankergrund statt, wo der Anker gegen Querkraft abgestützt ist. Ein Kippmoment auf die Adapterhülse bei Querbeanspruchung ist dadurch gering.

Eine Ausgestaltung der Erfindung sieht eine Fase, also einen Konus, an der Adapterhülse vor, die die Adapterhülse und damit die Dämpfungsvorrichtung beim Einbringen in ein Loch im zu befestigenden Bauteil am Loch ausrichtet und dadurch ein Einbringen in das Loch vereinfacht.

Eine Ausgestaltung der Erfindung sieht ein plastisch verformbares Element vor, das in gesetztem Zustand in radialer Richtung am Anker festgelegt ist, wobei auch Spiel zwischen dem Anker und dem plastisch verformbaren Element bestehen kann. Das plastisch verformbare Element kann beispielsweise die bereits beschriebene Lochscheibe oder der Boden der Adapterhülse mit dem Loch, das die Durchführungsöffnung für den Anker bildet, sein. Die Ausgestaltung und Form des plastisch verformbaren Elements ist nicht auf die beiden genannten Beispiele beschränkt. Die Funktion der Dämpfung nach Überwindung des Spiels ist bereits beschrieben worden.

Die Erfindung wird nachfolgend anhand in der Zeichnung dargestellter Ausführungsbeispiele näher erläutert. Es zeigen:
- Figur 1: einen Achsschnitt eines ersten Ausführungsbeispiels einer erfindungsgemäßen Dämpfungsvorrichtung;
- Figur 2: die Dämpfungsvorrichtung aus Figur 1 in gesetztem Zustand;
- Figur 3: ein Beispiel einer nicht-erfindungsgemäßen Dämpfungsvorrichtung in gesetztem Zustand;
- Figur 4: ein Beispiel einer nicht-erfindungsgemäßen Dämpfungsvorrichtung beim Setzen;
- Figur 5: die Dämpfungsvorrichtung aus Figur 4 in gesetztem Zustand;
- Figur 6: ein zweites Ausführungsbeispiel einer erfindungsgemäßen Dämpfungsvorrichtung beim Setzen; und
- Figur 7: die Dämpfungsvorrichtung aus Figur 6 in gesetztem Zustand.

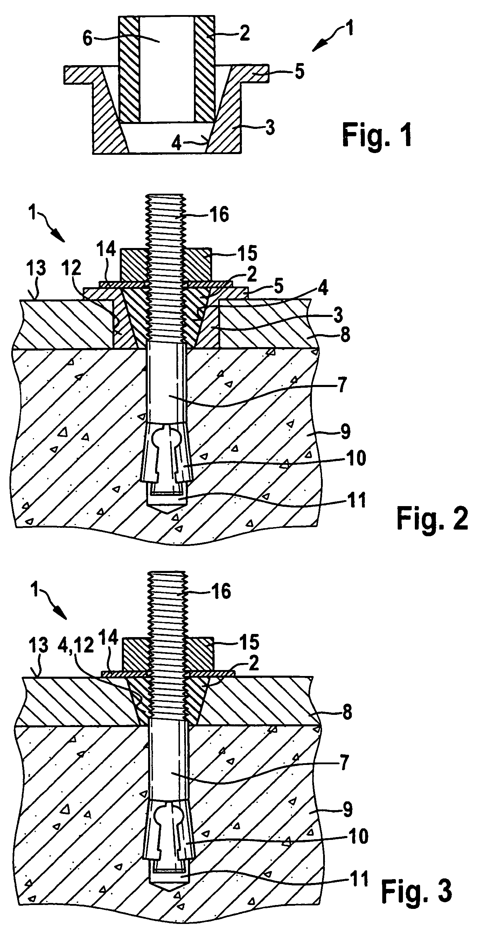

Die in Figur 1 dargestellte, erfindungsgemäße Dämpfungsvorrichtung 1 weist eine zylinderrohrförmige Elastomerhülse 2 und eine Adapterhülse 3 beispielsweise aus Stahl oder auch aus einem Kunststoff auf. Die Adapterhülse 3 ist ebenfalls rohrförmig, sie ist außen zylindrisch und innen hohlkonisch, wobei der Hohlkonus 4 axial durchgehend ist. Auf einer durchmesser-größeren Seite des Hohlkonus 4 weist die Adapterhülse 3 einen nach außen stehenden Flansch 5 auf. Ein axial durchgehendes Innenloch 6 der Elastomerhülse 2 und der ebenfalls durchgehende Hohlkonus 4 der Adapterhülse 3 bilden eine Durchführungsöffnung für einen stabförmigen Anker 7, wie er in Figur 2 gezeigt ist. Ein Außendurchmesser der Elastomerhülse 2 ist ungefähr so groß wie ein mittlerer Durchmesser des Hohlkonus 4 und die Elastomerhülse 2 ist axial länger als die Adapterhülse 3. Die Elastomerhülse 2 ist elastisch, jedenfalls vorwiegend elastisch, verformbar und kann zumindest näherungsweise als inkompressibel angesehen werden. Sie ist so bemessen, dass ihr Volumen einen den Anker 7 in der Adapterhülse 3 umgebenden Hohlraum vollständig ausfüllt und in Gewindegänge des Ankers 7 eindringt, wenn sie in den Hohlkonus 4 der dis Adapterhülse 3 gedrückt bzw. gepresst wird.

Figur 2 zeigt die Befestigung eines Bauteils 8 an einem Ankergrund 9 mit dem Anker 7 unter Verwendung der Dämpfungsvorrichtung 1. Bauteil 8, Ankergrund 9, Anker 7 und die Dämpfungsvorrichtung 1 bilden gemeinsam eine Befestigungsanordnung. Der Anker 7 ist ein Spreizanker mit einer aufspreizbaren Spreizhülse 10, er ist in ein Bohrloch 11 im Ankergrund 9 eingebracht und zur Verankerung im Bohrloch 11 aufgespreizt. Der Anker 7 steht aus dem Ankergrund 9 vor. Das Bauteil 8 weist ein Durchgangsloch 12 auf, dessen Durchmesser dem Durchmesser der Adapterhülse 3 der Dämpfungsvorrichtung 1 entspricht. Mit dem Durchgangsloch 12 ist das Bauteil 8 auf den aus dem Ankergrund 9 vorstehenden Teil des Ankers 7 aufgesetzt und es ist die Dämpfungsvorrichtung 1 mit ihrer Adapterhülse 3 ebenfalls in das Durchgangsloch 12 des Bauteils 8 eingebracht und auf den Anker 7 aufgesetzt. Der Flansch 5 der Adapterhülse 3 liegt auf einer dem Ankergrund 9 abgewandten Oberfläche des Bauteils 8 auf, die als Außenseite 13 bezeichnet wird. Anschließend an die Dämpfungsvorrichtung 1 ist eine Unterlegscheibe 14 auf den Anker 7 aufgesetzt und eine Mutter 15 auf ein Gewinde 16 des Ankers 7 geschraubt. Mit der Mutter 15 wird über die Unterlegscheibe 14 und den Flansch 5 der Adapterhülse 3 das Bauteil 8 gegen den Ankergrund 9 gespannt. Zugleich wird mit der Mutter 15 über die Unterlegscheibe 14 die Elastomerhülse 2 in den Hohlraum gedrückt, der den Anker 7 in der Adapterhülse 3 umgibt. Dabei wird die Elastomerhülse 2, die zumindest näherungsweise als inkompressibel angenommen werden kann, elastisch umgeformt, sie passt sich sowohl nach außen an den Hohlkonus 4 der Adapterhülse 3 als auch nach innen an das Gewinde 16 des Ankers 7 an, in dessen Gewindegänge sie eindringt. Wenn die Unterlegscheibe 14 auf dem Flansch 5 der Adapterhülse 3 aufsitzt, füllt die Elastomerhülse 2 den Hohlraum, der dem Anker 7 in der Adapterhülse 3 umgibt, vollständig aus, vorzugsweise mit einer gewissen Vorspannung. Durch den Hohlkonus 4 ist die Elastomerhülse 2 problemlos in die Adapterhülse 3 einbringbar und es erfolgt eine Zentrierung des Bauteils 8 am Anker 7. Das Bauteil 8 ist spielfrei am Anker 7 festgelegt.

Alternativ könnte die Unterlegscheibe 14 auch als Hutmutter oder dgl. ausgeführt sein, die mit der Adapterhülse 3 verschraubbar ist. Hierfür könnte die Adapterhülse 3 am Flansch 5 ein Außengewinde aufweisen. Somit wäre die Elastomerhülse 2 unabhängig vom Verspreizen des Ankers 7 axial verspannbar, die Dämpfungsvorrichtung 1 könnte in sich verspannt werden. Dies gilt entsprechend für das nachfolgend noch erläuterte zweite Ausführungsbeispiel.

Das gegen den Ankergrund 9 gespannte Bauteil 8 ist durch Reibung gegen Verschieben am Ankergrund 9 gehalten. Wird die Reibung zwischen dem Bauteil 8 und dem Ankergrund 9 bei hohen Belastungen überwunden, wie sie beispielsweise bei einem Erdbeben auftreten können, verschiebt sich das Bauteil 8 gegenüber dem Ankergrund 9. Zu dieser Verschiebung muss die Elastomerhülse 2 verformt werden, wodurch die Verschiebung des Bauteils 8 gegenüber dem Ankergrund 9 gedämpft wird.

Im Vergleich mit Figur 2 fehlt bei dem in Figur 3 dargestellten Beispiel die Adapterhülse 3. Das Durchgangsloch 12 des Bauteils 8 ist konisch, es bildet den Hohlkonus 4 der Dämpfungsvorrichtung 1 bzw. den Hohlkonus 4 für die Elastomerhülse 2. Wie zu Figur 2 beschrieben, ist das Bauteil 8 auf den aus dem Ankergrund 9 vorstehenden Teil des Ankers 7 aufgesetzt und die Elastomerhülse 2 ebenfalls auf den Anker 7 aufgesetzt und in das konische Durchgangsloch 12 des Bauteils 8 eingebracht. Mit der auf das Gewinde 12 des Ankers 7 geschraubten Mutter 15 wird die Elastomerhülse 2 über die Unterlegscheibe 14 in das Durchgangsloch 12 gedrückt und dabei so umgeformt, dass sie außen am Hohlkonus 4 und innen am Gewinde 16 anliegt und sich in das Gewinde 16 einformt. Über die Unterlegscheibe 14 spannt die Mutter 15 das Bauteil 8 gegen den Ankergrund 9. Bei einer Verschiebung des Bauteils 8 gegenüber dem Ankergrund 9 wird die Elastomerhülse 2 verformt und dämpft dadurch die Verschiebung des Bauteils 8 gegenüber dem Ankergrund 9.

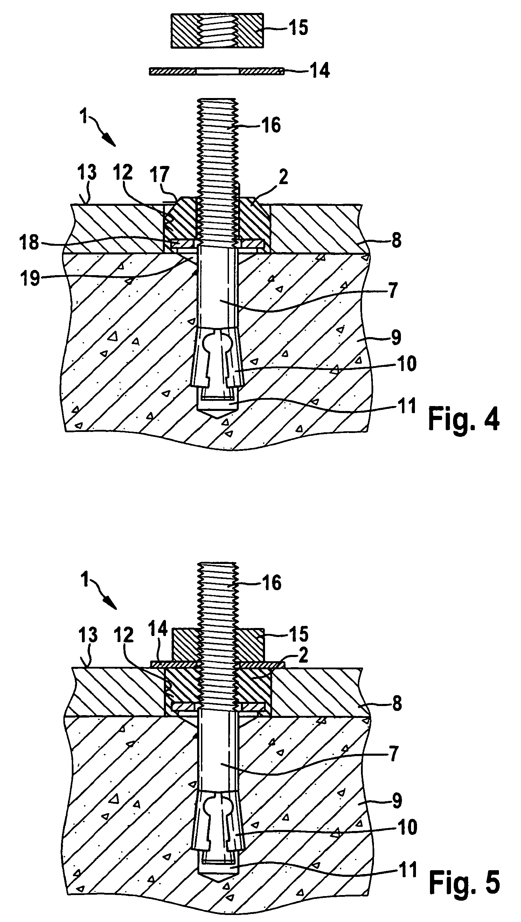

Auch bei der in Figur 4 dargestellten Ausführung weist die Dämpfungsvorrichtung 1 keine dis Adapterhülse auf, sondern die Elastomerhülse 2 ist unmittelbar in das Durchgangsloch 12 im zu befestigenden Bauteil 8 eingebracht. In Figur 4 ist das Durchgangsloch 12 im Bauteil 8 wie in Figur 2 zylindrisch. Die Elastomerhülse 2 ist unverändert zylinderrohrförmig, weist allerdings einen Konus 17 an ihrem dem Ankergrund 9 abgewandten Stirnende auf. Die Elastomerhülse 2 ist so lang, dass ein Teil ihres Konus 17 aus dem Durchgangsloch 12 des Bauteils 8 vorsteht. An ihrem anderen, dem Ankergrund 9 zugewandten Stirnende weist die Elastomerhülse 2 eine Lochscheibe 18 auf. Die Lochscheibe 18 besteht aus einem plastisch verformbaren Material, sie kann aus Stahl oder einem anderen Metall bestehen, oder aus Kunststoff. Die Aufzählung ist nicht abschließend.

Durch Aufschrauben und Festziehen der Mutter 15 auf das Gewinde 16 des Ankers 7 wird die Elastomerhülse 2 in das Durchgangsloch 12 im Bauteil 8 gedrückt bzw. gepresst und formt sich nach außen an eine Lochwandung und nach innen an das Gewinde 16 an, in dessen Gewindegänge die Elastomerhülse 2 hineinverformt wird. Auch bei dieser Ausführung füllt die Elastomerhülse 2 den Hohlraum, der den Anker 7 im Durchgangsloch 12 umschließt, vollständig aus. Die Lochscheibe 18 stützt die Elastomerhülse 2 in axialer Richtung ab, so dass sie beispielsweise nicht in einen Ausbruchkrater 19 an einer Mündung des Bohrlochs 11, in dem der Anker 7 verankert ist, hineinverformt wird. Die Lochscheibe 18 der Elastomerhülse 2 begrenzt das Volumen, das für die Verformung der Elastomerhülse 2 zur Verfügung steht, so dass die Elastomerhülse 2 nach dem Festziehen der Mutter 15 wie vorgesehen das zur Verfügung stehende Volumen spielfrei nach außen und nach innen ausfüllt. Bei einer Verschiebung des Bauteils 8 gegenüber dem Ankergrund 9 wird die Elastomerhülse 2 verformt und dämpft die Verschiebung. Ist die Verschiebung größer als ein Spiel der Lochscheibe 18 auf dem Anker 7 und im Durchgangsloch 12 des Bauteils 8, wird auch die Lochscheibe 18 verformt. Die Dämpfungswirkung der Dämpfungsvorrichtung 1 steigt dadurch. Die Verformung der Lochscheibe 18 ist plastisch, jedenfalls vorwiegend plastisch, so dass ein Mittelloch der Lochscheibe 18 zu einem Langloch verformt wird. Die Dämpfungswirkung der Lochscheibe 18 steht deswegen bei einer Verschiebung des Bauteils 8 gegenüber dem Ankergrund 9 in einer Richtung nur einmal zur Verfügung.

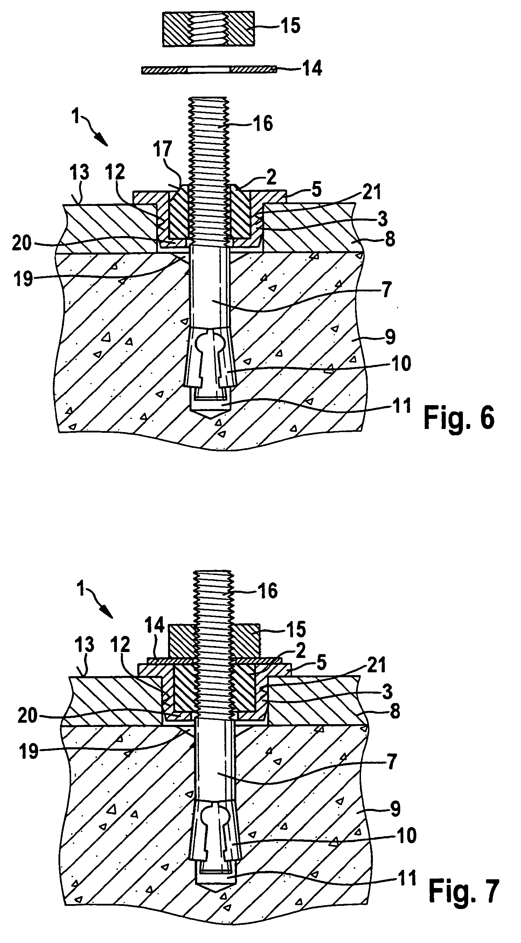

Die in Figur 6 dargestellte erfindungsgemäße Dämpfungsvorrichtung 1 weist wie in Figur 2 eine Adapterhülse 3 auf, in der die Elastomerhülse 2 aufgenommen ist. Im Unterschied zu Figur 2 ist die Adapterhülse 3 in Figur 6 innen nicht konisch, sondern zylindrisch. Die Adapterhülse 3 weist einen Boden 20 mit einem Mittelloch auf, der in seiner Funktion und Wirkung der Lochscheibe 18 aus Figuren 4 und 5 vergleichbar ist. Die Adapterhülse 3 aus Figur 6 oder jedenfalls ihr Boden 20 ist plastisch verformbar. Wie in Figur 4 weist die Elastomerhülse 2 einen Konus 17 auf, der in unverformtem Zustand teilweise aus der Adapterhülse 3 vorsteht. Die Adapterhülse 3 weist eine Fase 21 zum Einbringen in das Durchgangsloch 12 des zu befestigenden Bauteils 8 auf. Die Adapterhülse 3 ist axial kürzer als das Bauteil 8 dick ist, so dass die Adapterhülse 3 nicht auf dem Ankergrund 9 aufsitzt, sondern ausschließlich das Bauteil 8 gegen den Ankergrund 9 gespannt wird. Durch Festziehen der Mutter 15 wird die Elastomerhülse 2 in den den Anker 7 umgebenden Hohlraum in der Adapterhülse 3 hineinverformt (Figur 7) und dämpft eine Verschiebung des Bauteils 8 gegenüber dem Ankergrund 9. Dies ist mehrfach beschrieben worden. Ist die Verschiebung größer als ein Spiel des Ankers 7 im Mittelloch des Bodens 20 der Adapterhülse 3, wird der Boden 20 plastisch verformt und dämpft die Verschiebung zusätzlich, wie es anhand der Lochscheibe 18 aus Figuren 4 und 5 beschrieben worden ist.

Ebenso wie die Lochscheibe 18 aus Figuren 4 und 5 und der Boden 20 der Adapterhülse 3 aus Figuren 6 und 7 kann die Adapterhülse 3 aus Figur 2 plastisch verformbar sein, um bei einer entsprechend großen Verschiebung des Bauteils 8 gegenüber dem Ankergrund 9 die Dämpfungswirkung der Dämpfungsvorrichtung 1 zu erhöhen.

### Bezugszeichenliste

### Dämpfungsvorrichtung

- 1: Dämpfungsvorrichtung
- 2: Elastomerhülse
- 3: Adapterhülse
- 4: Hohlkonus
- 5: Flansch
- 6: Durchgangsloch
- 7: Anker
- 8: Bauteil
- 9: Ankergrund
- 10: Spreizhülse
- 11: Bohrloch
- 12: Durchgangsloch
- 13: Außenseite
- 14: Unterlegscheibe
- 15: Mutter
- 16: Gewinde
- 17: Konus
- 18: Lochscheibe
- 19: Ausbruchkrater
- 20: Boden
- 21: Fase

## Patentansprüche

1. Dämpfungsvorrichtung, mit einer Durchführungsöffnung für einen Anker (7), wobei die Dämpfungsvorrichtung (1) eine Elastomerhülse (2) aufweist, die in gesetztem Zustand den Anker (7) umschließt, und wobei bei einem axialen Spannen der Elastomerhülse (2) mit dem Anker (7) die Elastomerhülse (2) gestaucht wird, so dass sie sowohl am innen- als auch am Außenumfang spielfrei ist,
**dadurch gekennzeichnet,**
**dass** die Dämpfungsvorrichtung (1) eine Adapterhülse (3) aufweist, in der die Elastomerhülse (2) in gesetztem Zustand aufgenommen ist.

2. Dämpfungsvorrichtung nach Anspruch 1, **dadurch gekennzeichnet, dass** die Elastomerhülse (2) einen Konus (17) aufweist.

3. Dämpfungsvorrichtung nach Anspruch 1, **dadurch gekennzeichnet, dass** die dis Adapterhülse (3) einen Hohlkonus (4) aufweist, in dem die Elastomerhülse (2) in gesetztem Zustand aufgenommen ist und in dem sie spielfrei einliegt, wenn sie axial gespannt ist.

4. Dämpfungsvorrichtung nach Anspruch 3, **dadurch gekennzeichnet, dass** sich der Hohlkonus (4) in der Richtung verjüngt, in der die Elastomerhülse (2) eingebracht wird.

5. Dämpfungsvorrichtung nach Anspruch 3, **dadurch gekennzeichnet, dass** sich der Hohlkonus (4) in Richtung eines Ankergrunds (9) verjüngt.

6. Dämpfungsvorrichtung nach Anspruch 3, **dadurch gekennzeichnet, dass** die Adapterhülse (3) eine Fase (21) zum koaxialen Ausrichten beim Einbringen in ein Loch (12) aufweist.

7. Dämpfungsvorrichtung nach Anspruch 1, **dadurch gekennzeichnet, dass** die Dämpfungsvorrichtung (1) ein plastisch verformbares Element (20) aufweist, das in gesetztem Zustand in radialer Richtung am Anker (7) festlegbar ist.

8. Verfahren zum Befestigen eines Bauteils (8) an einem Ankergrund (9) mit einem Anker (7) und einer Dämpfungsvorrichtung (1), insbesondere einer Dämpfungsvorrichtung (1) nach einem der Ansprüche 1 bis 7, wobei das Bauteil (8) mit dem Anker (7) am Ankergrund (9) befestigt wird und die Dämpfungsvorrichtung (1) entweder eine Elastomerhülse (2) mit einem Konus (17) oder eine zylinderrohrförmige Elastomerhülse (2) und einen Hohlkonus (4) aufweist, das folgende Schritte umfasst:
a) Einbringen des Ankers (7) in ein Bohrloch (11) im Ankergrund (9);
b) Aufsetzen des Bauteils (8) auf den Ankergrund (9);
c) Einführen der Elastomerhülse (2) in ein Durchgangsloch (12) im Bauteil (8);
d) Stauchen der Elastomerhülse (2), derart, dass die gestauchte Elastomerhülse (2) einen ringförmigen Hohlraum, der den Anker (7) vor dem Stauchen im Durchgangsloch (12) oder in einer Adapterhülse (3), in der die Elastomerhülse (2) in gesetztem Zustand aufgenommen ist, umschließt, spielfrei ausfüllt.

9. Verfahren nach Anspruch 8, **dadurch gekennzeichnet, dass** die Elastomerhülse beim Spannen des Bauteils (8) gegen den Ankergrund (9) gestaucht wird.

## Claims

1. Damping device, having a feed-through opening for an anchor (7), wherein the damping device (1) has an elastomeric sleeve (2) which in the installed state encircles the anchor (7), and wherein when the elastomeric sleeve (2) is clamped axially with the anchor (7) the elastomeric sleeve (2) is compressed, so that it is without play both at its inner periphery and at its outer periphery, **characterized in that**
the damping device (1) has an adapter sleeve (3) in which the elastomeric sleeve (2) is accommodated in the installed state.

2. Damping device according to claim 1, **characterized in that** the elastomeric sleeve (2) has a cone (17).

3. Damping device according to claim 1, **characterized in that** the adapter sleeve (2) has a hollow cone (4) in which the elastomeric sleeve (2) is accommodated in the installed state and in which it is located without play when it is axially clamped.

4. Damping device according to claim 3, **characterized in that** the hollow cone (4) tapers in the direction in which the elastomeric sleeve (2) is introduced.

5. Damping device according to claim 3, **characterized in that** the hollow cone (4) tapers in the direction of an anchoring substrate (9).

6. Damping device according to claim 3, **characterized in that** the adapter sleeve (3) has a bevel (21) for coaxial alignment during introduction into a hole (12).

7. Damping device according to claim 1, **characterized in that** the damping device (1) has a plastically deformable element (20) which is arranged to be fixed in place on the anchor (7) in the radial direction in the installed state.

8. Method of fixing a component (8) to an anchoring substrate (9) with an anchor (7) and a damping device (1), especially a damping device (1) according to any one of claims 1 to 7, wherein the component (8) is fixed to the anchoring substrate (9) with the anchor (7) and the damping device (1) has either an elastomeric sleeve (2) with a cone (17) or a cylindrical-tubular elastomeric sleeve (2) and a hollow cone (4), which method comprises the following steps:
a) introduction of the anchor (7) into a drilled hole (11) in the anchoring substrate (9);
b) mounting of the component (8) on the anchoring substrate (9);
c) insertion of the elastomeric sleeve (2) into a through-hole (12) in the component (8);
d) compression of the elastomeric sleeve (2) in such a way that the compressed elastomeric sleeve (2) fills, without play, an annular cavity which encircles the anchor (7) before compression in the through-hole (12) or in an adapter sleeve (3) in which the elastomeric sleeve (2) is accommodated in the installed state.

9. Method according to claim 8, **characterized in that** the elastomeric sleeve is compressed when the component (8) is clamped against the anchoring substrate (9).

## Revendications

1. Dispositif d'amortissement, comportant une ouverture de passage pour un boulon d'ancrage (7), lequel dispositif d'amortissement (1) présente une douille en élastomère (2) qui entoure le boulon d'ancrage (7) dans l'état posé, la douille en élastomère (2) étant comprimée lors d'un serrage axial de la douille en élastomère (2) avec le boulon d'ancrage (7), de manière à être exempte de jeu aussi bien sur sa circonférence intérieure que sur sa circonférence extérieure,
**caractérisé en ce**
**que** le dispositif d'amortissement (1) présente une douille d'adaptation (3) dans laquelle la douille en élastomère (2) est reçue dans l'état posé.

2. Dispositif d'amortissement selon la revendication 1, **caractérisé en ce que** la douille en élastomère (2) présente un cône (17).

3. Dispositif d'amortissement selon la revendication 1, **caractérisé en ce que** la douille d'adaptation (3) présente un cône creux (4) dans lequel la douille en élastomère (2) est reçue dans l'état posé et dans lequel elle est logée sans jeu lorsqu'elle est serrée axialement.

4. Dispositif d'amortissement selon la revendication 3, **caractérisé en ce que** le cône creux (4) se rétrécit dans la direction dans laquelle la douille en élastomère (2) est introduite.

5. Dispositif d'amortissement selon la revendication 3, **caractérisé en ce que** le cône creux (4) se rétrécit dans la direction d'un fond d'ancrage (9).

6. Dispositif d'amortissement selon la revendication 3, **caractérisé en ce que** la douille d'adaptation (3) présente un chanfrein (21) pour l'alignement coaxial lors de l'introduction dans un trou (12).

7. Dispositif d'amortissement selon la revendication 1, **caractérisé en ce que** le dispositif d'amortissement (1) présente un élément (20) déformable plastiquement qui peut être fixé au boulon d'ancrage (7) en direction radiale dans l'état posé.

8. Procédé pour fixer un élément de construction (8) à un fond d'ancrage (9) avec un boulon d'ancrage (7) et un dispositif d'amortissement (1), en particulier un dispositif d'amortissement (1) selon l'une des revendications 1 à 7, l'élément de construction (8) étant fixé au fond d'ancrage (9) avec le boulon d'ancrage (7) et le dispositif d'amortissement (1) comprenant soit une douille en élastomère (2) avec un cône (17), soit une douille en élastomère (2) en forme de cylindre creux et un cône creux (4), lequel procédé consiste à :
a) introduire le boulon d'ancrage (7) dans un trou foré (1) dans le fond d'ancrage (9) ;
b) poser l'élément de construction (8) sur le fond d'ancrage (9) ;
c) introduire la douille en élastomère (2) dans un trou de passage (12) dans l'élément de construction (8) ;
d) comprimer la douille en élastomère (2) de manière que la douille en élastomère (2) comprimée remplisse sans jeu une cavité annulaire qui entoure le boulon d'ancrage (7) avant la compression dans le trou de passage (12) ou dans une douille d'adaptation (3) dans laquelle la douille en élastomère (2) est reçue dans l'état posé.

9. Procédé selon la revendication 8, **caractérisé en ce que** la douille en élastomère (2) est comprimée contre le fond d'ancrage (9) lors du serrage de l'élément de construction (8).
